# EUROPEAN PATENT APPLICATION

(11) **EP 2 708 788 A1**
(43) Date of publication of application: **19.03.2014**
(21) Application number: 12782451.4
(22) Date of filing: 24.04.2012
(51) Int. Cl.: F16L 11/12, F16L 55/00, G01M 3/04

(54) **HOSE FOR CONVEYING FLUIDS**

(30) Priority: 09.05.2011 JP 2011104506
(71) Applicant: The Yokohama Rubber Co., Ltd., Minato-ku Tokyo 105-8685 (JP)
(72) Inventor: TAMADA, Yoshinori, Hiratsuka-shi, Kanagawa 254-8601 (JP)
(74) Representative: Isarpatent
(86) International application number: PCT/JP2012/060895
(87) International publication number: WO 2012/153628

(57) **Abstract**

A reinforcing layer group is disposed between an inner rubber layer 2 and a cover rubber layer 4. The reinforcing layer group is constituted by a plurality of layers. A buffer layer 8 is disposed between inner reinforcing layer groups 5 and 7 and an outer reinforcing layer group 9. The inner reinforcing layer groups 5 and 7 and the outer reinforcing layer group 9 are formed by separating the reinforcing layer group inside and outside. A leakage detection unit 10 with a viewing window 11 that communicates with the buffer layer 8 via a conduit 15 is disposed at an end portion in a hose axis direction. A protective cover 16 is removably and replaceably attached to cover the viewing window 11, which communicates with the buffer layer 8. The protective cover 16 at least partially includes a transparent portion 16b. This achieves a fluid carrying hose where reliable visual checking can be carried out over a long period to determine whether or not a fluid flowing in a hose has spilled out into the buffer layer.

## Description

### TECHNICAL FIELD

The present invention relates to a fluid carrying hose. More specifically, the present invention relates to a fluid carrying hose that can be reliably checked visually over a long period for whether or not a fluid flowing in a hose spills out into a buffer layer.

### BACKGROUND ART

A hose for fluid cargo-handling with a big bore, which is typified by a marine hose, is required to have a structure where a fluid, such as oil, sent out at high pressure does not leak outside of the hose so as not to cause a contamination accident in seawater. However, if the fluid should leak outside of the hose, the situation must be immediately notified to the outside. Therefore, with this type of fluid carrying hose, a reinforcing layer group constituted by a plurality of layers is disposed outside of an inner rubber layer. The inner rubber layer is corrosion resistant against a fluid. The reinforcing layer group is separated inside and outside to form an inner reinforcing layer group and an outer reinforcing layer group. An internal structure that includes a buffer layer made of a foam material, such as a sponge, is disposed between the inner reinforcing layer group and the outer reinforcing layer group. Further, a leakage detection unit is disposed near the hose end portion. The leakage detection unit detects a high pressure fluid spilled out into the buffer layer by breakage of the inner rubber layer and the inner reinforcing layer group.

As a leakage detection unit, for example, Patent Document 1 proposes a hose where a fluid introduced from the buffer layer to the hose end portion through a conduit is checked visually through a viewing window made of a transparent resin.

However, with a leakage detection unit having the above-described viewing window, a marine organism such as blue mussel and acorn barnacle is attached to the viewing window during usage over a long period of time. This causes a problem in that visually checking becomes difficult. If a marine organism is attached like this, the marine organism is detached by tapping it with a metal bar, the marine organism is removed by washing it away with high pressure water, or a similar method. However, an impact of these methods may damage the viewing window.

Patent Document 1: JP-A-2003-21568

### DISCLOSURE OF THE INVENTION

### PROBLEMS TO BE SOLVED BY THE INVENTION

It is an object of the present invention to provide a fluid carrying hose that can be reliably checked visually over a long period for whether or not a fluid flowing in a hose spills out into a buffer layer.

### SOLUTIONS TO THE PROBLEMS

In order to achieve the above-described objects, a fluid carrying hose according to one aspect of the present invention is configured as follows. A reinforcing layer group is disposed between an inner rubber layer and a cover rubber layer. The reinforcing layer group includes a plurality of layers. A buffer layer made of a foam material is disposed between an inner reinforcing layer group and an outer reinforcing layer group. The inner reinforcing layer group and the outer reinforcing layer group are formed by separating the reinforcing layer group inside and outside. A leakage detection unit with a viewing window that communicates with the buffer layer via a conduit is disposed at an end portion of the fluid carrying hose in a hose axis direction. A protective cover is removably and replaceably attached to cover the viewing window. The protective cover is at least partially transparent.

### EFFECTS OF THE INVENTION

With a fluid carrying hose according to one aspect of the present invention, a protective cover is removably and replaceably attached. The protective cover is at least partially transparent and attached so as to cover a viewing window that communicates with the buffer layer via a conduit. This prevents a marine organism from directly attaching to the viewing window. Additionally, even if the marine organism attaches to the protective cover, the marine organism can be removed by an impact applied from the outside without damaging the viewing window. Moreover, in the case where the protective cover is damaged by the impact, the protective cover is easily replaced. Accordingly, a fluid flowing in the hose can be reliably checked visually over a long period for whether or not a fluid flowing in a hose spills out into a buffer layer.

Formation of a space portion between the protective cover and the viewing window reduces transmission of an impact applied to the protective cover to the viewing window.

Further, disposing a desiccant in the space portion or filling the space portion with a transparent fluid prevents cloudiness of the transparent portion of the protective cover due to condensation.

A material forming the protective cover and/or the transparent portion of the protective cover contains a marine organism anti-adhesive agent. This reduces the likelihood of marine organism attachment, and enables reliable visual checking over a longer period for whether or not a fluid flowing in a hose spills out into the buffer layer.

A conduit for communication between the buffer layer and the viewing window by means of an interposed fluid pressure reducing unit, damage to the viewing window can also be prevented. Objects, characteristics, situations, and advantageous effects of the present invention will be clarified by referring to the description and the accompanying drawings below.

### BRIEF DESCRIPTION OF THE DRAWINGS

Fig. 1 is a partial sectional view illustrating an end portion structure of a fluid carrying hose according to an embodiment of the present invention.
Fig. 2 is a sectional view illustrating a structure of a leakage detection unit.
Fig. 3 is a plan view illustrating a structure of a pressure reducing unit.
Fig. 4 is a sectional view viewed from an arrow direction of X-X in Fig. 3.

### DESCRIPTION OF PREFERRED EMBODIMENTS

Embodiments of the present invention will be described below by referring to the accompanying drawings.

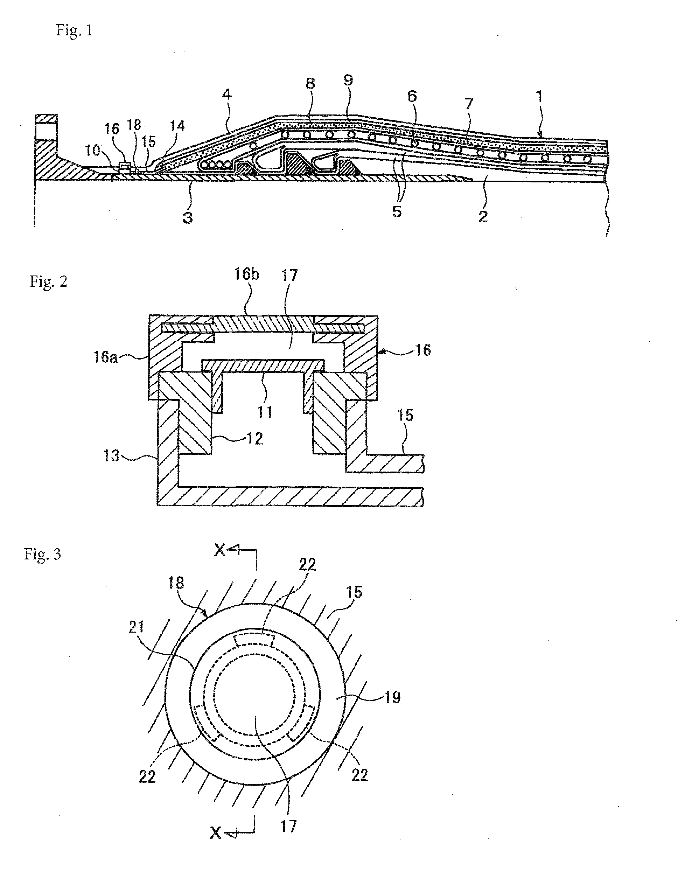

Fig. 1 illustrates an end portion structure of a fluid carrying hose according to an embodiment of the present invention.

This fluid carrying hose includes a coupling metal fitting 3. The coupling metal fitting 3 is attached at an end portion of a hose main body 1 with a liquid tight seal via an inner rubber layer 2. The hose main body 1 has a structure that is configured by disposing a reinforcing layer group formed by a plurality of layers between the inner rubber layer 2 and a cover rubber layer 4. The reinforcing layer group forms a laminated layer of, in order from the inner rubber layer 2 side, a first inner carcass layer 5, a spiral wire reinforcing layer 6, a second inner carcass layer 7, and an outer carcass layer 9.

The inner rubber layer 2 is made of a material exhibiting excellent resistance to corrosion against a fluid flowing in the hose. Additionally, the first inner carcass layer 5 includes a plurality of reinforcing layers formed by organic fiber cords that are bias arranged in the hose axis direction. The plurality of reinforcing layers is laminated such that the organic fiber cords intersect with each other between the layers. A part of the layers is turned up at the end portion of the hose main body 1. The second inner carcass layer 7 includes a plurality of reinforcing layers formed by organic fiber cords that are bias arranged in the hose axis direction. The plurality of reinforcing layers is laminated such that the organic fiber cords intersect with each other between the layers. These inner carcass layers 5 and 7 provide the hose main body 1 mainly with a strength in the axis direction and an appropriate flexibility.

A spiral wire reinforcing layer 6 is configured by spirally winding a metal wire around the outer periphery of the first inner carcass layer 5 at a predetermined pitch. This provides strength to the hose main body 1 mainly in the circumferential direction. This prevents the generation of a kink when the hose main body 1 is curved, and further prevents the hose main body 1 from collapse due to external pressure.

The outer carcass layer 9, similarly to the inner carcass layers 5 and 7, includes a plurality of reinforcing layers formed by organic fiber cords that are bias arranged in the hose axis direction. The plurality of reinforcing layers is laminated such that the organic fiber cords intersect with each other between the layers.

The buffer layer 8 is mainly made of a foam material and is disposed between the second inner carcass layer 7 and the outer carcass layer 9. The foam material used is preferably a natural rubber sponge and polyethylene sponge. When the inner rubber layer 2 and the inner carcass layers 5 and 7 are broken, this buffer layer 8 absorbs and reduces pressure of a leaked fluid by collapse of the foam material. This prevents transmission of the breakage to the outer carcass layer 9.

The hose main body 1 may include a buoyancy layer in addition to the above-described constitution members. The buoyancy layer is disposed between the outer carcass layer 9 and the cover rubber layer 4 to provide buoyancy to the hose main body 1.

A leakage detection unit 10 is disposed near the end portion of such fluid carrying hose to detect a leakage of the fluid. As illustrated in Fig. 2, the leakage detection unit 10 is configured by fitting a leakage detector 12 to a mounting opening 13 with a liquid tight seal. The leakage detector 12 includes a viewing window 11 made of transparent resin such as polycarbonate on its top surface. The mounting opening 13 is secured to the surface of the coupling metal fitting 3. This mounting opening 13 communicates with the buffer layer 8 through a strainer 14 embedded into the buffer layer 8 and the conduit 15.

If the inner carcass layers 6 and 7 are broken and the fluid flowing in the hose spills out into the buffer layer 8, the fluid is led to the mounting opening 13 through the strainer 14 and the conduit 15. The fluid is visually checked from outside of the hose through the viewing window 11.

The structure of the leakage detector 12 is not limited to one illustrated in Fig. 2, as disclosed in JP-A-2003-21568, a leaked fluid can be visually checked easily from the viewing window 11 using a colored fluid, crushing disk, or similar.

With the present invention, the protective cover 16 is removably and replaceably attached to the leakage detector 12 to cover this viewing window 11. This protective cover 16 includes a transparent portion 16b, which is made of resin, at a part of a metal cylindrical body 16a. The internal portion can be observed through the transparent portion 16b, and the transparent portion 16b is attached to the leakage detector 12 with a liquid tight seal. It is preferred that a sealing material such as a rubber seal be disposed between the cylindrical body 16a and the transparent portion 16b.

Attachment of the protective cover 16 like this prevents a marine organism from directly attaching to the viewing window 11. Additionally, even if the marine organism attaches to the protective cover 16, the marine organism can be removed by applying impact from outside without damaging the viewing window 11. Moreover, even in the case where the protective cover 16 is damaged by the impact, the protective cover 16 is easily replaced. Accordingly, if the inner carcass layers 6 and 7 are broken and the fluid spills out into the buffer layer 8, the fluid spilling into the leakage detector 12 can be reliably checked visually over a long period through the viewing window 11 and the transparent portion 16b.

If a marine organism strongly adheres to the protective cover 16 and therefore its removal is very difficult, the protective cover 16 may be removed and the fluid flowing into the leakage detector 12 may be visually checked through the viewing window 11.

On the other hand, in the case where the fluid carrying hose is normal, it can be reliably checked visually that the fluid does not spill into the leakage detector 12 through the viewing window 11 and the transparent portion 16b.

It is preferred that a space portion 17 be disposed between the protective cover 16 and the viewing window 11. This constitution allows reduction of transmission of an impact, which is applied to the protective cover 16, to the viewing window 11.

Further, to prevent cloudiness of the transparent portion 16b due to condensation, it is preferable to position a desiccant in the space portion 17 in advance or filling the space portion 17 with a transparent fluid. The transparent fluid is filled to fulfill the space portion 17. The transparent fluid may be filled to the amount required for removal of cloudiness. As a desiccant, silica gel, for example, cobalt free silica gel compliant to RoHS (the restriction of the use of certain hazardous substances in electrical and electronic equipment) and as a transparent fluid, for example, fresh water are respectively illustrated as an example.

As a material forming at least either the protective cover 16 or the transparent portion 16b of the protective cover 16, a marine organism anti-adhesive agent is preferred to be included. This prevents attachment of the marine organism and allows reliable visual checking over a longer period for whether or not the fluid flowing in the hose spills out into the buffer layer 8. As marine organism anti-adhesive agents, amine compound and aliphatic quaternary ammonium salt, which do not cause a contamination in seawater, are illustrated as an example.

By attaching the above-described protective cover 16, even if the viewing window 11 is internally damaged due to the flow of leaked fluid with high pressure to the leakage detector 12, an effect that flow of the fluid to the outside is prevented with the protective cover 16 can be expected.

However, to prevent damage of such viewing window 11, disposing a fluid pressure reducing unit 18 in the middle of the conduit 15 of the leakage detection unit 10 is preferred. This reduces pressure generated by the fluid flowing from the mounting opening 13 to the leakage detector 12.

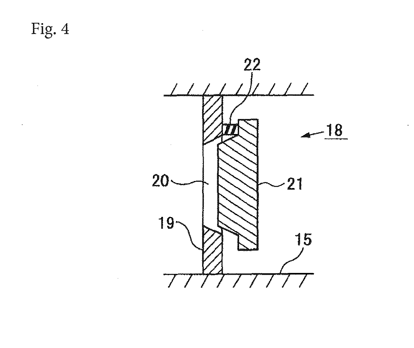

The structure of the pressure reducing unit 18 is not especially limited, for example, as illustrated in Figs. 3 and 4, a valve element 21 is fitted to a through hole 20 of an orifice plate 19 in the conduit 15. The valve element 21 is fitted from the upper stream side via elastic bodies 22 (in this example , three pieces are disposed at the same interval) intermittently disposed around the through hole 20. When the valve element 21 is pushed by the fluid spilling into the buffer layer 8, the elastic body 22 deforms and a gap between the orifice plate 19 and the valve element 21 becomes small, thus reducing pressure in the fluid.

The fluid carrying hose according to the present invention is preferably applicable as a hose for fluid cargo-handling with a big bore. Especially, the fluid carrying hose is preferably applicable to a marine hose that carries oil between a tanker and a reserve tank on the ground, or similar.

This application is based on Japanese Patent Application No. 2011-104506 filed on May 9, 2011 in Japan by the applicants of this application, the present invention of which is incorporated herein by reference in their entirety.

The above description of a specific embodiment of the present invention is disclosed as illustrative. This does not intend to be exhaustive or limit the present invention to the described embodiments as they are. Many modifications and variations will be apparent to one of ordinary skill in the art in light of the above teachings.

### DESCRIPTION OF REFERENCE SIGNS

- 1: hose main body
- 2: inner rubber layer
- 3: coupling metal fitting
- 4: cover rubber layer
- 5: first inner carcass layer
- 6: spiral wire reinforcing layer
- 7: second inner carcass layer
- 8: buffer layer
- 9: outer carcass layer
- 10: leakage detection unit
- 11: viewing window
- 12: leak detector
- 13: mounting opening
- 14: strainer
- 15: conduit
- 16: protective cover
- 17: space portion
- 18: pressure reducing unit
- 19: orifice plate
- 20: through hole
- 21: valve element
- 22: elastic body

## Claims

1. A fluid carrying hose, comprising:
a reinforcing layer group that includes a plurality of layers, the reinforcing layer group being disposed between an inner rubber layer and a cover rubber layer;
a buffer layer disposed between an inner reinforcing layer group and an outer reinforcing layer group, the inner reinforcing layer group and the outer reinforcing layer group being formed by separating the reinforcing layer group inside and outside;
a leakage detection unit with a viewing window that communicates with the buffer layer via a conduit, the leakage detection unit being disposed at an end portion in a hose axis direction; and
a protective cover removably and replaceably attached to cover the viewing window, the protective cover being at least partially transparent.

2. The fluid carrying hose according to claim 1, comprising
a space portion disposed between the protective cover and the viewing window.

3. The fluid carrying hose according to claim 2, wherein
the space portion includes a desiccant or is filled with transparent liquid.

4. The fluid carrying hose according to any of claims 1 to 3, wherein
the protective cover and/or a transparent portion of the protective cover contains a material of a marine organism anti-adhesive agent.

5. The fluid carrying hose according to any of claims 1 to 4, wherein
the conduit includes a fluid pressure reducing unit.
